# EUROPEAN PATENT APPLICATION

(11) **EP 1 130 421 A2**
(43) Date of publication of application: **05.09.2001**
(21) Application number: 01104786.7
(22) Date of filing: 27.02.2001
(51) Int. Cl.: G02B 5/02, G02F 1/1335

(54) **Light diffusing plate and display apparatus**

(30) Priority: 29.02.2000 JP 2000053391
(71) Applicant: FUJI PHOTO FILM CO., LTD., Kanagawa (JP)
(72) Inventor: Yamaguchi, Akira, Ashigara-kami-gun, Kanagawa (JP); Nakagawa, Kenichi, Fujinomiya-shi, Shizuoka (JP); Tatsuta, Sumitaka, Fujinomiya-shi, Shizuoka (JP); Agano, Toshitaka, Ashigara-kami-gun, Kanagawa (JP)
(74) Representative: Klunker . Schmitt-Nilson . Hirsch

(57) **Abstract**

The light diffusing plate includes a light-transmissive support, a diffusing layer having light-transmissive spheres, and a light-sensitive color forming material interposed between the support and the diffusing layer, the light-sensitive color forming material containing a positive-acting diazo light- and heat-sensitive material or a positive-acting silver halide light-sensitive emulsion, or a negative-acting light-sensitive color forming material in the side contacting the light-transmissive spheres and a positive-acting light-sensitive color forming material in the side of the support, the light-sensitive color forming material being developed to take on color after generally parallel light is launched from a side where the diffusing layer is provided. The display apparatus makes use of the diffusing plate.

## Description

### BACKGROUND OF THE INVENTION

This invention relates to the technical field of light diffusing plates and display apparatus. More particularly, the invention relates to a light diffusing plate that can realize liquid-crystal displays having a wide range of viewing angles and capable of representing high-contrast images, as well as a display apparatus (e.g. a liquid-crystal display apparatus or an image display apparatus having a matrix structure) that makes use of the light diffusing plate.

With the recent spread of word processors and personal computers, various kinds of image display apparatus have been developed and used for image display. Image display apparatus generally comprises a display device by which electric signals carrying image information are converted into image-bearing light for display on the screen, a drive circuit for driving the display device and a power supply to the drive circuit. While various kinds of image display apparatus are available depending upon the optics for display and the method of driving the display device, the CRT (cathode-ray tube) display has heretofore been the most common type. For example, black-and-white CRT displays are used in the medical field for ultrasonic, CT and MRI diagnostic purposes and, in the absence of a digital matrix structure, they can produce smooth and natural images.

Most recently, liquid-crystal displays (LCDs) are increasingly used in various fields on account of their advantages such as ease in size reduction, small thickness and lightweightness. The use of LCDs as a display for word processors and computers is increasing at a particularly rapid speed. In addition, the use of LCDs as a monitor in ultrasonic, CT and MRI diagnostic apparatus is under review. Conventionally, these medical diagnostic apparatus have primarily used CRTs (cathode-ray tubes) as a monitor.

As just mentioned above, LCDs have many advantages such as ease in size reduction, small thickness and lightweightness. On the other hand, they have poor viewing angle characteristics (narrow viewing angle) in that as the viewing direction or angle changes, the contrast ratio of an image decreases sharply and the gradation also reverses to have the image look differently. As a result, depending on the position of the viewer, the image cannot be viewed correctly.

In the medical applications described above, diagnosis with monitors is based on the difference in image density, so not only is it required to produce an image of high contrast ratio but at the same time, incorrect recognition of an image can cause wrong diagnosis or inconsistency in the results of diagnoses. Under these circumstances, it is required that images of high contrast ratio be displayed over a wide range of viewing angles. Another problem peculiar to medical monitors is that image is usually displayed in monochrome (black and white colors) and, hence, suffers considerable drop in contrast as the viewing angle varies.

LCDs adapted for viewing over a wide range of angles include those operating in an IPS (in-plane switching) mode and a MVA (multi-domain vertical alignment) mode. However, even these LCDs do not have a sufficiently wide range of viewing angles to satisfy the requirement of monochromatic images, especially ones that are used in medical applications.

A LCD is known that can produce image of good contrast ratio over a wide range of viewing angles. It is backlighted with collimated light (which travels straight) and the light passing through the liquid-crystal panel is diffused with a diffusing plate.

However, no LCDs have yet been proposed that successfully use a light diffusing plate to offer a sufficiently wide range of viewing angles to justify use in medical applications. Another problem with the use of light diffusing plates is that the incident extraneous light is reflected and scattered to lower the contrast of the image being viewed; this often precludes the viewing of the desired image.

Displays such as LCDs that have a clear enough matrix structure of digital pixels to give high sharpness and high definition are suitable for the purpose of representing artificial images such as CG (computer graphics). On the other hand, the clear matrix structure of digital pixels that is possessed by LCDs is adverse, rather than favorable, to still images such as X-ray images that have natural smoothness and a mosaic texture is imparted to produce an undesired effect called "pixelization" characterized by jaggy image edges. This problem is particularly noticeable when the pixels are of a large size {such as about 300 µm in 15" XGA (extended graphics array)} since vertical streaks are clearly visible in the matrix structure of the color filter.

The same "pixelization" problem occurs in other displays such as color CRTs and PDPs (plasma display panels) that have a matrix structure.

### SUMMARY OF THE INVENTION

The present invention has been accomplished under these circumstances and has as an object providing a light diffusing plate of greater lightfastness that has an outstanding light diffusing capability while effectively suppressing the drop in contrast due to surface reflection and which, when used in liquid-crystal displays, provides a good contrast ratio over a wide range of viewing angles to realize a liquid-crystal display that can advantageously be used in medical applications.

Another object of the invention is to provide a liquid-crystal display apparatus utilizing the light diffusing plate, especially a display apparatus that is depixelated {free from pixelization (jaggies)} to enable the display of smooth and natural images.

In order to attain the first object described above, the first aspect of the present invention provides a light diffusing plate comprising a light-transmissive support, a diffusing layer having light-transmissive spheres, and a light-sensitive color forming material interposed between the light-transmissive support and the diffusing layer, the light-sensitive color forming material containing at least a diazonium salt, a coupler and a base and takes on no color in exposed areas, the light-sensitive color forming material being thermally developed to take on color after generally parallel light is applied from a side where the diffusing layer is formed.

Preferably, at least one member of the group consisting of the diazonium salt, the coupler and the base is contained in microcapsules.

The first aspect of the present invention provides a light diffusing plate comprising a light-transmissive support, a diffusing layer having light-transmissive spheres, and a light-sensitive color forming material interposed between the light-transmissive support and the diffusing layer, the light-sensitive color forming material comprising a positive-acting silver halide light-sensitive emulsion which takes on no color in exposed areas, the light-sensitive color forming material being subjected to a process for photographic emulsions comprising development, fixing and rinsing steps to take on color after generally parallel light is applied from a side where the diffusing layer is formed.

Preferably, in each of the light diffusing plates described above, the light-sensitive color forming material forms a layer of light-sensitive color forming material between the light-transmissive support and the diffusing layer.

Preferably, the light-sensitive color forming material contacts the light-transmissive spheres and contains a light absorbing material.

It is preferable that the light diffusing plate further comprises a material that contacts the light-transmissive spheres and which contains a light absorbing material, the light-sensitive color forming material being provided between the material that contacts the light-transmissive spheres and the light-transmissive support.

Preferably, the non-pass area of the light diffusing plate 16 enable it to reflect no more than 10% of incoming extraneous light.

The first aspect of the present invention provides a light diffusing plate comprising a light-transmissive support, a diffusing layer comprising light-transmissive spheres, a material that contacts the light-transmissive spheres, and a light-sensitive color forming material that is provided between the material contacting the light-transmissive spheres and the light-transmissive support and which takes on no color in exposed areas, the material contacting the light-transmissive spheres being a light-sensitive color forming material that takes on color in exposed areas, the light-sensitive color forming material being developed to take on color after generally parallel light is launched from a side where the diffusing layer is provided.

Preferably, the light-sensitive color forming material that takes on no color in exposed areas contains at least a diazonium salt, a coupler and a base, the color development is thermal development.

Preferably, at least one member of the group consisting of the diazonium salt, the coupler and the base is contained in microcapsules.

Preferably, the light-sensitive color forming material that takes on no color in exposed areas is a positive-acting silver halide light-sensitive emulsion and the color development is by a process for photographic emulsions comprising development, fixing and rinsing steps.

Preferably, the light-sensitive color forming material that takes on color in exposed areas is a negative-acting silver halide light-sensitive emulsion and the color development is by a process for photographic emulsions comprising development, fixing and rinsing steps.

Preferably, the light-sensitive color forming material that takes on color in exposed areas is a negative-acting, light-sensitive, thermally developable material containing a triphenylmetehane-containing leuco dye precursor, a photo-acid generator, a photo-radical generator and a radical quencher.

Preferably, the light-sensitive color forming material that takes on no color in exposed areas contains a light absorbing material.

Preferably, the light absorbing material has been removed by the process for photographic emulsions comprising development, fixing and rinsing steps.

Preferably, the diffusing layer has been formed by burying the light-transmissive spheres after a layer of the material that contacts the light-transmissive spheres was first formed.

Preferably, a side of the light-transmissive support which is away from the diffusing layer has been subjected to a treatment for non-reflection of light.

In order to attain the second object described above, the second aspect of the present invention provides a display apparatus comprising a liquid-crystal display panel, a backlight section for launching parallel light into the liquid-crystal display panel, and the above-described light diffusing plate which is positioned away from the backlight section with respect to the liquid-crystal display panel.

Preferably, the display apparatus further comprises a sheet for preventing scattering of extraneous light positioned on the light diffusing plate.

Preferably, the light diffusing plate has an indiscernible structure providing optical refractive power and is positioned on a viewing side of a display screen of an image display device having a matrix structure.

Preferably, the diffusing layer comprises the light-transmissive spheres fixed to a binder.

Preferably, a sheet for preventing scattering of extraneous light is positioned on the light diffusing plate provided on the viewing side of the display screen.

### BRIEF DESCRIPTION OF THE DRAWINGS

Fig. 1 is an exploded perspective view showing in conceptual form an embodiment of the display apparatus of the invention;
Fig. 2A is a cross sectional view that shows in conceptual form an embodiment of the light diffusing plate of the invention;
Fig. 2B is a cross sectional view that shows in conceptual form another embodiment of the light diffusing plate of the invention;
Fig. 3A is a cross sectional view showing in conceptual form a step in an exemplary process for producing the embodiment of the light diffusing plate of the invention;
Fig. 3B is a cross sectional view showing in conceptual form the light diffusing plate produced by the process;
Fig. 3C is a cross sectional view showing an exemplary use of the light diffusing plate in conceptual form;
Fig. 4A is a cross sectional view showing in conceptual form a step in an exemplary process for producing another embodiment of the light diffusing plate of the invention;
Fig. 4B is a cross sectional view showing in conceptual form the light diffusing plate produced by the process;
Fig. 4C is a cross sectional view showing an exemplary use of the light diffusing plate in conceptual form;
Fig. 5A is a cross sectional view showing in conceptual form a step in an exemplary process for producing the yet another embodiment of the light diffusing plate of the invention;
Fig. 5B is a cross sectional view showing in conceptual form the light diffusing plate produced by the process;
Fig. 5C is a cross sectional view showing an exemplary use of the light diffusing plate in conceptual form;
Figs. 6A, 6B and 6C are cross sectional views showing in conceptual form a sequence of steps in an exemplary process for producing the still another embodiment of the light diffusing plate of the invention;
Fig. 7 shows an embodiment of the image display apparatus of the invention in conceptual form;
Fig. 8 is a schematic of the liquid-crystal panel and the light diffusing plate in the image display apparatus shown in Fig. 7; and
Fig. 9 is a schematic of the light diffusing plate and the sheet for preventing the scattering of extraneous light in the image display apparatus shown in Fig. 7.

### DETAILED DESCRIPTION OF THE INVENTION

The light diffusing plate and the display apparatus according to the invention are described below in detail with reference to the preferred embodiments shown in the accompanying drawings.

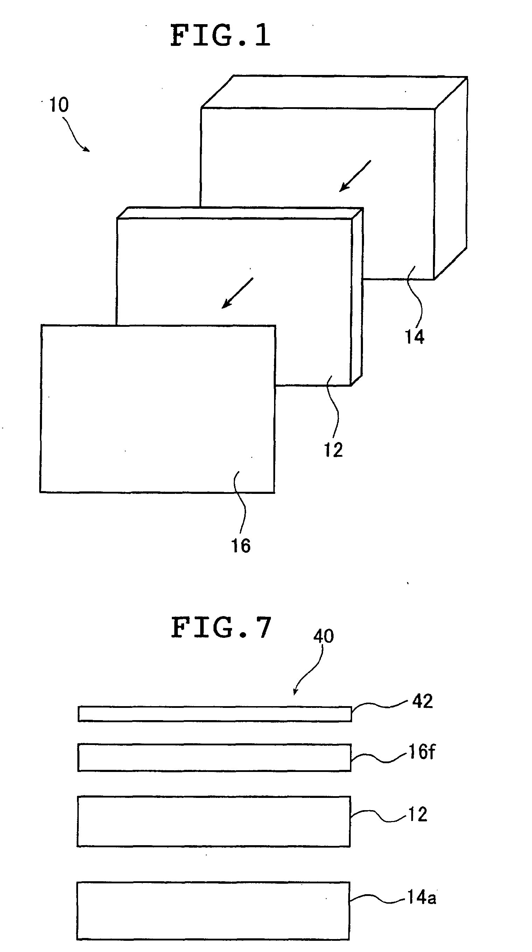

Fig. 1 shows in conceptual form an embodiment of the display apparatus according to the second aspect of the invention which uses the light diffusing plate according to the first aspect of the invention. The display apparatus generally indicated by 10 in Fig. 1 is a so-called liquid-crystal display (hereunder referred to as LCD) that utilizes a liquid-crystal panel 12 as an image display means. It is composed of the liquid-crystal panel 12, a backlight section 14 that allows collimated light (which travels straight) to be incident on the liquid-crystal panel 12, and a light diffusing plate 16 according to the first aspect of the invention which diffuses the image-bearing light that has passed through the liquid-crystal panel 12. The liquid-crystal panel 12 is connected to its driver (not shown) and the display apparatus 10 is combined with any necessary members that are included in a known LCD.

The display apparatus 10 that makes use of the light diffusing plate 16 according to the first aspect of the invention provides high contrast ratio over a wide range of viewing angles and, hence, can advantageously be used as a monitor for medical diagnostic apparatus.

The liquid-crystal panel 12 to be used in the display apparatus 10 may be a known liquid crystal panel used in various kinds of LCDs that has a liquid-crystal sandwiched between two spaced transparent supports, which are overlaid with transparent electrodes to produce a sheet assembly having an analyzer on one side and a polarizer on the other side.

Hence, the liquid-crystal panel 12 may be of a full-color or monochromatic type and can be operated in all known modes including a TN (twisted nematic) mode, a STN (supertwisted nematic) mode, an ECB (electrically controlled birefringence) mode, an IPS (in-plane switching) mode and a MVA (multi-domain vertical alignment) mode. Among these, operation in the TN mode is particularly advantageous. Liquid-crystal display in the TN mode has rather poor viewing angle characteristics but compared to the IPS and MVA modes that allow for wider viewing angles, the TN mode has the advantage of simplifying the construction of the liquid-crystal panel. Therefore, liquid-crystal panels of high resolution can be backlighted at an increased utilization factor to facilitate the display of high-definition image. The liquid-crystal panel 12 also has no limitations on the switching device or the matrix.

Various types of light source units can all be used as the backlight section 14 if they emit a sufficient quantity of collimated light to enable satisfactory image viewing. Preferred examples include the use of a louver that transmits only part of scattered light, an overhead projector that uses a lens to collimate the light from a point light source, and the use of the micro-lens effect to create directional parallel light from scattered light.

The light diffusing plate 16 of the invention has a structure with optical refractive power that is typically made of small enough spheres to be indiscernible by the viewer of the display apparatus 10. Compared to the "pass areas" of the plate 16 which principally transmit the parallel light incident on the above-mentioned structure, the other areas (non-pass areas) have lower light transmittance, preferably absorb light (to work as a black mask). It is essential for the purposes of the invention that the constituent material of the pass areas and that of the non-pass areas be applied simultaneously to form coatings.

Preferably, the non-pass areas of the light diffusing plate 16 enable it to reflect no more than 10% of incoming extraneous light.

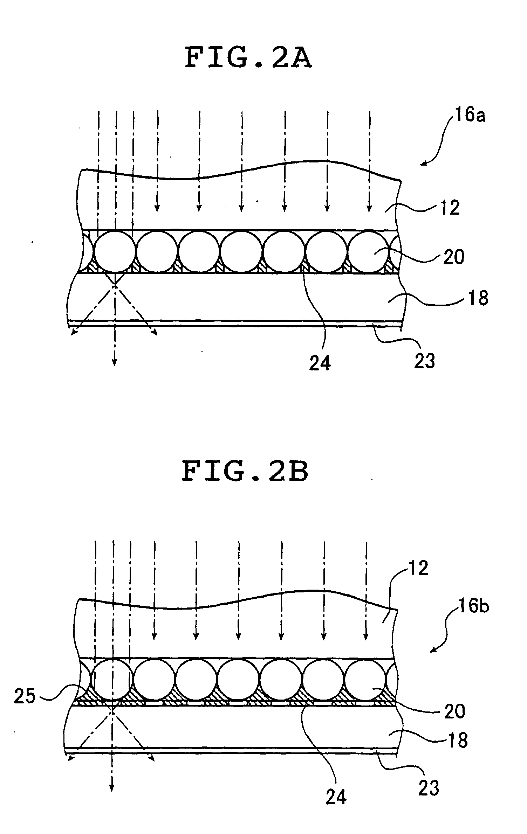

Fig. 2A is a diagrammatic cross section that shows in conceptual form an embodiment of the light diffusing plate according to the first aspect of the invention. The light diffusing plate 16a is an embodiment of the light diffusing plate 16 of the invention and it comprises a light-transmissive support sheet 18 and light-transmissive spheres (hereunder called "beads") 20 that make up a diffusing layer and which are fixed to the support sheet 18 by means of a light-sensitive color forming material (in layer) 24 which takes on no color in exposed areas. The beads 20 are in partial contact with the support sheet 18. That part of the light-sensitive color forming material 24 which is at the bottoms of the beads 20 and in nearby areas is preliminarily rendered transparent upon exposure to the collimated light coming from the side where the beads 20 are fixed; on the other hand, the areas of the light-sensitive color forming material 24 through which the collimated light has not passed take on color upon subsequent development processing.

Therefore, as shown by the one-long-and-one short dashed lines in Fig. 2A, the image-bearing collimated light that was issued from the backlight section 14 to pass the through the liquid-crystal panel 12 is refracted (diffused) by the spherical beads 20 to pass through the areas of contact between the beads 20 and the support sheet 18 and nearby areas (these two light pass areas are hereunder simply referred to as "contact areas"), whereupon the collimated light is adequately diffused. In addition, the unexposed areas of the light-sensitive color forming material (hereunder referred to as the "color forming material") 24 have undergone color development to acquire a light absorbing capability. As a result, the non-pass areas other than the areas of contact between the beads 20 and the support sheet 18 work as a black mask and the extraneous light coming from the viewer side is neither reflected nor scattered by the light diffusing plate 16, with no resulting drop in contrast.

This is how the display apparatus (LCD) 10 of the invention can offer good contrast ratio over a wide range of viewing angles.

The support sheet 18 is not limited to any particular types and it may be made of various materials as long as they have adequate light transmitting properties and also have sufficient mechanical strength for specific uses of the display apparatus 10. Specific examples that can advantageously be used include various kinds of glass, as well as various kinds of resin materials including polyesters, polyolefins, polyamides, polyethers, polystyrenes, polyester amides, polycarbonates, polyphenylene sulfides, polyether esters, polyvinyl chloride and polymethacrylate esters.

The illustrated light diffusing plate 16a and other embodiments of the light diffusing plate 16 of the invention may be rigid plates or flexible sheets or films and the constituent material, thickness and other features of the support sheet 18 may be selected as appropriate for the required mechanical strength and the intended use of the display apparatus 10.

In order to further improve the visibility of the display apparatus 10, the viewing side of the support sheet 18 (which is away from the side where the beads 20 are fixed) is preferably provided with a non-light reflecting layer 23 by a known AR (anti-reflection) treatment such as application of an AR coating.

The beads 20 for forming a diffusion layer are (generally) spherical bodies that transmit light and which are of such a small size that they are not discernible by the viewer; the beads 20 are fixed to the support sheet 18 by means of the light-sensitive color forming material 24 in such a way that they are partly in contact with or in close proximity to the support sheet 18.

In the light diffusing plate 16a of the invention, the beads 20 principally serve to make up the aforementioned structure having an optical refractive index. Hence, when using the beads 20, the light diffusing plate 16a is oriented and held in such a way that the side where the beads 29 are fixed faces the liquid-crystal panel 12.

The constituent material of the beads 20 is not limited to any particular types and various transparent materials may be employed. Examples are the above-listed constituent materials of the support sheet 18; for several reasons such as having satisfactory optical characteristics, (meth)acrylic resins and glass are used with advantage.

The size of the beads 20 is not particularly limited, either, and may vary with the use of the display apparatus 10 and other factors as long as the beads are small enough to be indiscernible by the viewer. Preferably, the weight average diameter of the beads is between 3 µm and 40 µm, more preferably between 5 µm and 20 µm. If the beads 20 are to be used on the light diffusing plate in an image display apparatus according to the second embodiment which is described later, the more preferred bead size is between 10 µm and 21 µm.

The light-sensitive color forming material 24 is a positive-acting light-sensitive color forming material which takes on no color in exposed areas. Upon subsequent development by application of heat or development processing, the unexposed areas take on color to produce light blocking areas (through which light does not pass) whereas the uncolored, exposed areas produce light transmitting areas (through which light can pass).

In the specification of Japanese Patent Application No. 009136/2000, the assignee stated that a preferred example of the positive-acting color forming material is one that contains heat-responsive microcapsules confining an electron-donating colorless dye, a compound having an electron-accepting portion and a polymerizable vinyl monomer portion in the same molecule, and a photopolymerization initiator. In this color forming material, the stated compound and photopolymerization initiator are present outside the heat-responsive microcapsules.

The color forming material is such a recording material that in the exposed areas, the composition exterior to the heat-responsive microcapsules (which is referred to as the "curable composition") hardens (polymerizes) to become fixed and the compound will not move even if heat is subsequently applied; on the other hand, if the unexposed areas are heated, the above-mentioned compound having the mobile (unfixed) electron-accepting portion and the polymerizable vinyl monomer portion or an electron-accepting compound moves around within the color forming material so that the electron-donating colorless dye within the microcapsules takes on color to produce a positive image. Details of this color forming material are given in Unexamined Published Japanese Patent Application (kokai) No. 226174/1998. Besides, the color forming materials (light-sensitive, thermally developable recording materials) described in Unexamined Published Japanese Patent Application (kokai) Nos. 87827/1991 and 211252/1992 may also be used with advantage if they are positive-acting light-sensitive materials.

This is the positive-acting light-sensitive material the assignee disclosed in the specification of Japanese Patent Application No. 009136/2000 as a positive-acting color forming material that is applicable to light diffusing plates. The light diffusing plate 16 provided by the present invention is more light-proof than those using this positive-acting light-sensitive material.

The light-sensitive color forming material 24 that can be used with this highly light-proof light diffusing plate 16 of the invention may be exemplified by the following. One preferred example of the applicable light-sensitive color forming material 24 is a positive-acting diazo light- and heat-sensitive material (light-sensitive thermally developable material) such that a light-sensitive color forming material which takes on no color in exposed areas contains at least a diazonium salt, a coupler and a base, with the unexposed areas being subjected to color development by means of heating.

In a preferred mode of this light-sensitive color forming material, the oil-soluble diazonium salt is contained in microcapsules whereas the coupler and the base are provided outside the capsules in the form of an emulsion/dispersion with other components such as a sensitizer. In the exposed areas, the diazonium salt loses the coupling capability and takes on no color but in the unexposed areas, the coupler, base and sensitizer that have melted upon heating get into the capsules and enter into coupling reaction with the diazonium salt to take on color. Details of this color forming material are given in Unexamined Published Japanese Patent Application (kokai) No. 261893/1992.

Another preferred example is a light-sensitive material such that a light-sensitive color forming material which takes on no color in exposed areas is a positive-acting, silver halide light-sensitive emulsion, with the unexposed areas being subjected to color development by means of photographic development, fixing and rinsing.

Preferred examples of the positive-acting, silver halide light-sensitive emulsion include a direct reversal emulsion for micro-duplicate films and a direct reversal emulsion for radiographic duplicates.

In ordinary negative-acting, silver halide light-sensitive emulsions, sensitized nuclei form in the exposed areas and upon development they are reduced to metallic silver, thereby forming a black image. In the positive-acting light-sensitive emulsion to be used in the invention, silver halide is preliminarily fogged and a desensitizing dye is added to it so that the exposed areas will not be reduced but the non-exposed areas are reduced to form colored silver.

For further details of the positive-acting, direct reversal emulsions, see "Kagaku Shashin Binran (Handbook of Scientific Photography)", Maruzen Shoten. To develop, fix and rinse the positive-acting silver halide light-sensitive emulsions, processing solutions for ordinary black-and-white emulsions may be used with advantage.

The method of fabricating the light diffusing plate 16a is not limited in any particular way. In one example, a dispersion of the beads 20 in the light-sensitive color forming material 24 is applied to the support sheet 18 and dried (cured). Alternatively, the light-sensitive color forming material 24 is applied to the support sheet 18 and the beads 20 are sprayed over the entire surface of the applied coating, which is subsequently dried.

Fig. 2B is a diagrammatic cross section that shows in conceptual form another example of the light diffusing plate according to the first aspect of the invention. The light diffusing plate 16b shown in Fig. 2B has a layer of light-sensitive color forming material 24 formed using the positive-acting light-sensitive color forming material 24 as a positive-acting light sensitive material which takes on no color in exposed areas, overlaid with beads 20 fixed by means of a transparent binder 25 and then exposed and developed to form a black mask. Examples of the positive-acting, light-sensitive color forming material 24 are the above-mentioned positive-acting diazo light- and heat-sensitive materials and positive-acting, silver halide light-sensitive emulsions. The light-diffusing plate 16b shown in Fig. 2B and the light-diffusing plate 16a shown in Fig. 2A share many constituent elements in common, so like constituent elements are identified by like numerals and the following description mainly concerns different parts.

The light diffusing plate 16b shown in Fig. 2B has a black colored layer of a light-sensitive material, say, a light-sensitive color forming material (hereunder sometimes referred to simply as a "color forming material") 24, onto which are fixed beads 20 and which has not taken on color in those areas (pass areas) which transmit the light refracted by the beads 20 fixed by means of the binder 25.

Hence, as in the case shown in Fig. 2A, the image-bearing collimated light passing through the liquid-crystal panel 12 is refracted by the beads 20 and passes through the non-colored areas (light pass areas) of the layer of color forming material 24 to be diffused in an advantageous way; at the same time, the layer of color forming material 24 serves as a black mask (which does not transmit light); as a result, there is no drop in contrast on account of the reflection and scattering of extraneous light and the display apparatus (LCD) 10 provides good enough contrast ratio over a wide range of viewing angles.

The light diffusing plate 16b having the above-described construction can be fabricated by the following method. First, the color forming material 24, optionally dissolved or dispersed in water or any other suitable solvent, is applied to the support sheet 18 and dried to form a layer of the color forming material 24. Subsequently, the beads 20 are fixed onto the layer of the color forming material 24. For example, a dispersion of the beads 20 in the binder 25 is applied or, alternatively, the binder 25 is first applied and thereafter the beads 20 are sprayed to the entire surface of the applied coating of the binder 25, which is then dried to fix the beads 20 in position. If desired, prior to their fixing, the beads 20 on the binder 25 may be pressed down or allowed to settle under gravity so that they come into contact with the layer of the color forming layer 24.

Once the beads 20 are fixed in position, collimated light which is preferably the same as what is issued from the backlight section 14 is launched from the side where the beads 20 are fixed. As a result, the light launched into the beads 20 is refracted and (together with the light not launched into the beads 20) enters the layer of the color forming material 24, whereupon those areas of the layer (i.e., the color forming material 24) into which the light has been launched become exposed. In other words, only those areas of the layer of the color forming material 24 through which the light has passed are exposed to become "light pass areas" which will not take on color upon development.

It should be noted that the light pass (transmissive) areas which consist of both the areas of contact between the beads 20 and the layer of the color forming material 24 and nearby areas are exposed but the other areas which make up the non-light pass (light blocking) areas are not exposed. This is because the light launched into the beads 20 is sufficiently condensed in the light pass areas to expose the layer of the color forming material 24 in those areas whereas the light launched into the non-light pass areas is not condensed by the beads 20 so that the layer of the color forming material 24 in the non-light pass areas is not effectively exposed.

Subsequently, the layer of the color forming material 24 (i.e., the color forming material in that layer) is developed with heat or suitable developing and processing solutions for use with photographic emulsions, whereupon only the non-exposed areas take on color to become non-light pass areas and the exposed areas become light pass areas. As already mentioned, it is only those areas which do not transmit light such as the diffused light (i.e., the light refracted by the beads 20) that take on color upon development. Thus, the layer of the color forming material 24 works advantageously as a black mask that absorbs the extraneous light coming from the viewer side.

If the binder 25 is used in the embodiment under consideration to fix the beads 20, it is preferably light-transmissive, most preferably colorless and transparent. Various adhesives may be used as the binder 25 if they can fix the beads 20 to the support sheet 18. Advantageous examples include vinyl acetate resins, ethylene-vinyl acetate copolymers, vinyl chloride resins, vinyl chloride-vinylidene chloride copolymers, (meth)acrylate ester resins, butyral resins, silicone resins, polyester resins, vinylidene fluoride resins, nitrocellulose resins, polystyrene resins, styrene-acrylic copolymers, urethane resins, polyethylene resins, polypropylene resins, polyethylene chloride resins, rosin derivatives, gelatin and mixtures thereof.

If the binder 25 is used to fix the beads 20, the two materials have preferably a small difference in refractive index, most preferably 0.1 or less. Although the invention is by no means limited to these preferred values, they are effective in preventing light from being reflected at the interface between the beads 20 and the binder 25, thereby enabling the viewing of more advantageous images.

In the embodiment under consideration, the weight ratio of the binder 25 to the beads 20 also is not limited to any particular values but in view of such factors as the surface state and the brightness of the surface of the light diffusing plate during image display, the range of 1:1 - 5:1 is preferred. In the embodiment under consideration, the binder 25 is light-transmissive, so the beads 20 may be buried in the binder 25.

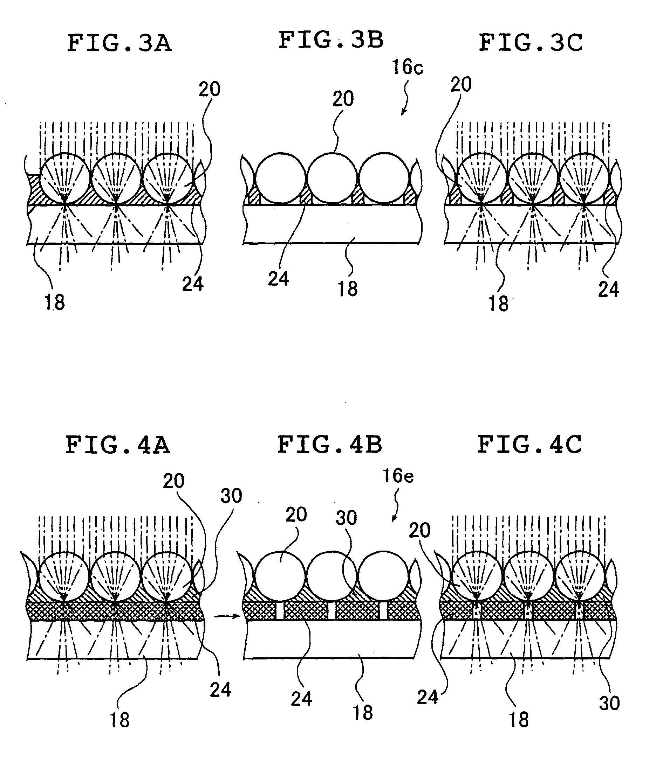

If, as shown in Figs. 3A and 4A, the layer of color forming material 24 which serves as a black mask is to be formed of a positive-acting light-sensitive material of comparatively high sensitivity by a self-alignment process, not only the areas of contact between the beads 20 and the layer of the color forming material 24 but also the spaces between adjacent beads 20 are illuminated with light to become exposed, letting incident light to pass through those spaces after development. This means the color forming material 24 does not work as a black mask and the diffusing plates 16c and 16d which are shown in Figs. 3B and 4B, respectively, fail to perform the intended function as a black screen. To avoid this problem, some measure must be taken to ensure that no light will pass through the spaces between adjacent beads 20.

Accordingly, if one wants to fabricate the diffusing plates 16c and 16d shown in Figs. 3A and 4A, respectively, the layer of color forming material (light-sensitive material) 24 per se or the overlying layer (which is closer to the exposing light source), say, a binder layer 30 is formed as a layer that is a moderate absorber of the exposing light, namely, as a layer that has a moderate density with respect to the exposing light. To this end, the layer of color forming material 24 or the overlying layer of binder 30 may itself be formed of a material having a moderate density with respect to the exposing light. Alternatively, a moderate absorber of the exposing light may be added to the layer of color forming material 24 or the overlying layer of binder 30.

The binder 30 may be formed of the same material as is used to make the binder 25, except that it need not be colorless and transparent. If the constituent material of the binder 30 itself is colorless and transparent or if it absorbs only a small amount of the exposing light, they may be rendered to have a light absorbing capability by adding carbon black or any other light absorber in the necessary amount to achieve moderate absorption of the exposing light.

As a result, those spaces between adjacent beads 20 (which may be in a layer of the color forming material 24 shown in Fig. 3A or the binder 30 shown in Fig. 4A) acquire moderate density and, due to the substantial thickness of the layer, the exposing light attenuates and fails to fully expose the light-sensitive material in the layer 24 which, upon development, takes on color to block visible light. On the other hand, due to the small thickness of the light absorbing layer which is either the layer of color forming material 24 shown in Fig. 3A or the layer of binder 30 shown in Fig. 4A, the light-sensitive material in the layer 24 which is located in the optical path of the light passing through the beads 20 is exposed and does not take on color upon development. The small thickness of the light absorbing layer offers the added advantage of not impairing the intended light transmitting capability.

Therefore, in the case of fabricating the diffusing plate 16c shown in Fig. 3B, the beads 20 are bonded to the transparent support sheet 18 using as a binder a light-sensitive material that has moderate density at the wavelength of light to which it is sensitive and which, upon development by heat or development processing, forms high-density color in the visible range.

For example, a light-sensitive material having these characteristics is applied to the transparent support sheet 18 to form the layer of color forming material 24, which is overlaid with the beads 20 by spraying them over its entire surface; if necessary, the beads 20 are pressed down or allowed to settle under gravity so that they are brought into contact with the support sheet 18; subsequently, the layer of color forming material 24 is dried so that the beads 20 are bonded and fixed to the support sheet 18 by means of the layer 24.

Subsequently, as shown in Fig. 3A, collimated light is applied as exposing light from the side where the beads 20 are fixed. The incident light is refracted as it passes through the beads 20 and it is then launched into the space between the bottom of each bead 20 and the support sheet 18 or into those areas of the thin layer of color forming material 24 which are located near to the areas of contact between the beads 20 and the support sheet 18. The layer of color forming material 24 in such areas also has moderate density but on account of its small thickness, it is sufficiently illuminated with the exposing light and those areas which are in the neighborhood of the areas of contact between the beads 20 and the support sheet 18 are adequately exposed. The exposing light is also launched into the layer of color forming material 24 in the space between every adjacent beads 20; however, the layer of color forming material 24 located in such spaces is so thick that it cannot be fully exposed and the lower part of it remains unexposed.

Thereafter, the layer of color forming material 24 is developed by heat or development processing, whereupon only the non-exposed areas take on color to high density and become non-light pass areas. On the other hand, the exposed areas take on no color and become light pass areas. As a result, the light diffusing plate 16c shown in Fig. 3B is fabricated and the layer of color forming material 24 that has taken on color to high density functions as a black mask.

The thus fabricated light diffusing plate 16c is used with the liquid-crystal panel 12. As shown in Fig. 3C, the image-bearing light passing through the liquid-crystal panel 12 is refracted and fully diffused by the beads 20. On the other hand, the layer of color forming material 24 which functions as a black mask is a good absorber of the extraneous light coming from the support sheet 18 (the viewer's side).

In the case of fabricating the diffusing plate 16d shown in Fig. 4B, a layer of a light-sensitive color forming material 24 which takes on color to high density in the visible range after development by heat or development processing is first formed on the transparent support sheet 18 and the beads 20 are then bonded and fixed to the layer 24 using as the binder 30 a resin that has moderate density at the wavelength of light to which it is sensitive.

Subsequently, as shown in Fig. 4A, collimated light is applied as exposing light from the side where the beads 20 are fixed. The incident light is refracted as it passes through the beads 20 and it is then launched into the space between the bottom of each bead 20 and the layer of color forming material 24 or into those areas of the thin layer of the binder 30 which are located near to the areas of contact between the beads 20 and the layer of color forming material 24. The layer of the binder 30 in such areas has moderate density but on account of its small thickness, it transmits the exposing light and the underlying layer of color forming material 24 in those areas which are in the neighborhood of the areas of contact between the beads 20 and the layer 24 is adequately exposed. The exposing light is also launched into the layer of the binder 30 in the space between every adjacent beads 20; however, the layer of the binder 30 located in such spaces is so thick that the underlying layer of color forming material 24 cannot be fully exposed but remains unexposed.

Thereafter, the layer of color forming material 24 is developed by heat or development processing, whereupon only the non-exposed areas take on color to high density and become non-light pass areas. On the other hand, the exposed areas take on no color and become light pass areas. As a result, the light diffusing plate 16d shown in Fig. 4B is fabricated and the layer of color forming material 24 that has taken on color to high density functions as a black mask.

The thus fabricated light diffusing plate 16d is used with the liquid-crystal panel 12. As shown in Fig. 4C, the image-bearing light passing through the liquid-crystal panel 12 is refracted and fully diffused by the beads 20. On the other hand, the layer of color forming material 24 which functions as a black mask is a good absorber of the extraneous light coming from the support sheet 18 (the viewer's side).

If the layer 24 in the light diffusing plate 16d is formed of a positive-acting, direct reversal emulsion, a water-soluble dye that dissolves out during a photographic process comprising development, fixing and rinsing steps is preferably used as the moderate absorber to be added to the layer of color forming material 24 and/or the overlying layer of binder 30. This is effective in further improving the transparency of the light pass areas formed as the result of development processing.

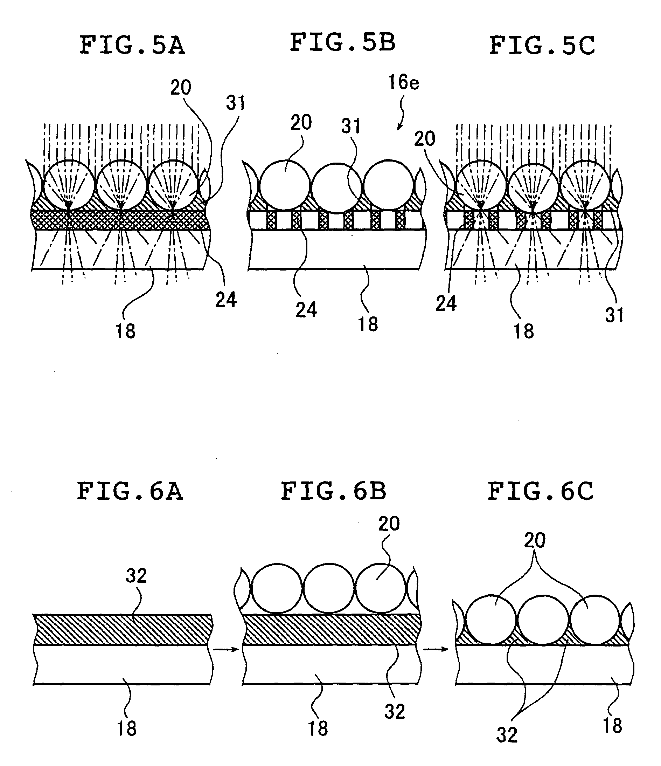

Yet another embodiment of the invention is described below with reference to Fig. 5. The light diffusing plate indicated by 16e in Figs. 5A - 5C differs from the light diffusing plate 16d shown in Fig. 4 in that a negative-acting light-sensitive material (in layer) 31 is substituted for the binder 30.

Stated specifically, a support sheet 18 as a transparent base is overlaid with a layer of a positive-acting light-sensitive material 22 (hereunder referred to as the first layer of color forming material 22); beads 20 are partially buried in or placed adjacent to the first layer of color forming material 22; a layer of a negative-acting light-sensitive material 31 (hereunder referred to as the second layer of color forming material 31) is placed adjacent to the first layer of color forming material 22, optionally with an intermediate layer (not shown) being interposed. A part of each bead 20 contacts the first layer of color forming material 22 and another part of the bead contacts the second layer of color forming material 31 which is made of the negative-acting light-sensitive material.

The resulting assembly is then illuminated with collimated light from the side where the beads 20 are fixed (see Fig. 5A). The light is condensed as it passes through the beads 20 and the positive-acting light-sensitive emulsion in the underlying first layer of color forming material 22 is exposed by the condensed light. A portion of the incident light passes through the space between every adjacent beads 20 to expose not only the negative-acting light-sensitive material in the second layer of color forming material 31 in the areas corresponding to such spaces but also the positive-acting light-sensitive material in the underlying first layer of color forming material 22. Upon subsequent application of heat or development processing, the exposed areas under the beads 20 turn transparent and in the other areas, either the negative-acting emulsion in the second layer of color forming material 31 or the positive-acting emulsion in the first layer of color forming material 22 or both emulsions take on color. The thus fabricated light diffusing plate 16e ensures that no light coming from the support sheet 18 is reflected at all.

In Figs. 5B and 5C, the second layer of color forming material 31 which is made of the negative-acting light-sensitive material is hatched to indicate that the areas under the spaces between beads 20 that extend in a direction perpendicular to the paper have been exposed.

The negative-acting light-sensitive material 31 to be used in the embodiment under consideration may be exemplified by ordinary negative-acting, black-and-white silver halide light-sensitive materials which are also described in "Kagaku Shashin Binran (Handbook of Scientific Photography)", supra. Negative-acting, black-and-white silver halide emulsions as exemplary negative-acting, black-and-white silver halide light-sensitive materials are used with particular advantage if they are combined with the aforementioned direct-reversal silver halide emulsion which is used as the positive-acting light-sensitive material in the first layer of color forming material 22. With this combination, the desired color formation is possible by a single cycle of exposure and subsequent development processing.

Another example of the negative-acting light-sensitive material 31 to be used in the embodiment under consideration is one that comprises a triphenylmethane-containing leuco dye precursor, a photo-acid generator, a photo-radical generator and a radical quencher. To mention a specific example, a leuco dye precursor such as leuco crystal violet, a photo-acid generator such as bromomethylphenylsulfone and a photo-radical generator such as a lophine dimer are contained in microcapsules and a radical quencher such as phenidone is provided outside the capsules. In the exposed areas of this negative-acting light-sensitive material, radicals are generated to oxidize the leuco crystal violet so that it takes on color but in the unexposed areas, the radical quencher gets into the capsules upon subsequent heat treatment to prevent color formation, thus rendering the light-sensitive material stable. For details of this type of light-sensitive material, reference should be had to Unexamined Published Japanese Patent Application (kokai) Nos. 61190/1993 and 218482/1997.

The negative-acting light-sensitive material 31 may be used with advantage if it is combined with the aforementioned diazo-type light- and heat-sensitive material used as the positive-acting light-sensitive material in the first layer of color forming material 22 or with the positive-acting, light-sensitive thermally developable material described in the specification of Japanese Patent Application No. 009136/2000, supra. With these combinations, the desired color formation is possible by a single cycle of exposure and subsequent development processing.

In the embodiment under consideration, the positive-acting light-sensitive material used in the first layer of color forming material 22 and the negative-acting light-sensitive material in the second layer of color forming material 31 are to be developed by the same means or method. This is not the sole case of the invention and the two layers of color forming material 22 and 31 may be formed of a positive-acting and a negative-acting light material that are to be developed by different means or methods.

To be more specific, any positive-acting, light-sensitive color forming materials may be used in the first layer of color forming material 22 and examples include the aforementioned positive-acting diazo light- and heat-sensitive material, light-sensitive materials comprising positive-acting, silver halide light-sensitive emulsions such as direct reversal emulsions for use with micro-duplicate films or radiographic duplicates, as well as the positive-acting, light-sensitive thermally developable materials and the positive-acting heat ablative materials that are described in Japanese Patent Application No. 009136/2000, supra.

Any negative-acting, light-sensitive color forming materials may be used in the second layer of color forming material 31 and examples include the aforementioned ordinary negative-acting, black-and-white silver halide light-sensitive materials (e.g. negative-acting, black-and-white silver halide emulsions) and negative-acting light- and heat-sensitive materials.

As already mentioned, before being fixed, the beads 20 may be pressed down or allowed to settle under gravity. Figs. 6A - 6C show this embodiment in which the beads 20 lying on a layer 32 are pressed down or allowed to settle under gravity until they are brought into contact with the support sheet 18 and fixed in position. First, as shown in Fig. 6A, a layer 32 which is to contact the beads 20 is formed on the support sheet 18 by, for example, applying the layer of color forming material 24 shown in Fig 2A or 3A; then, as shown in Fig. 6B, the beads 20 are sprayed over the entire surface of the contact layer 32. Subsequently, the beads 20 on the contact layer 32 are pressed down or allowed to settle under gravity until they come into contact with the support sheet 18 as shown in Fig. 6C.

In still another obvious embodiment which is not shown, before they are fixed to the layer of color forming layer 24 (see Fig. 2B or 4A), the beads 20 on the layer of binder 25 (see Fig. 2B) or the layer of binder 30 (see Fig. 4A) are pressed down or allowed to settle under gravity until they contact the underlying layer of color forming material 24.

Described above are the basic constructions of the light diffusing plate according to the first aspect of the invention and the display apparatus according to its second aspect.

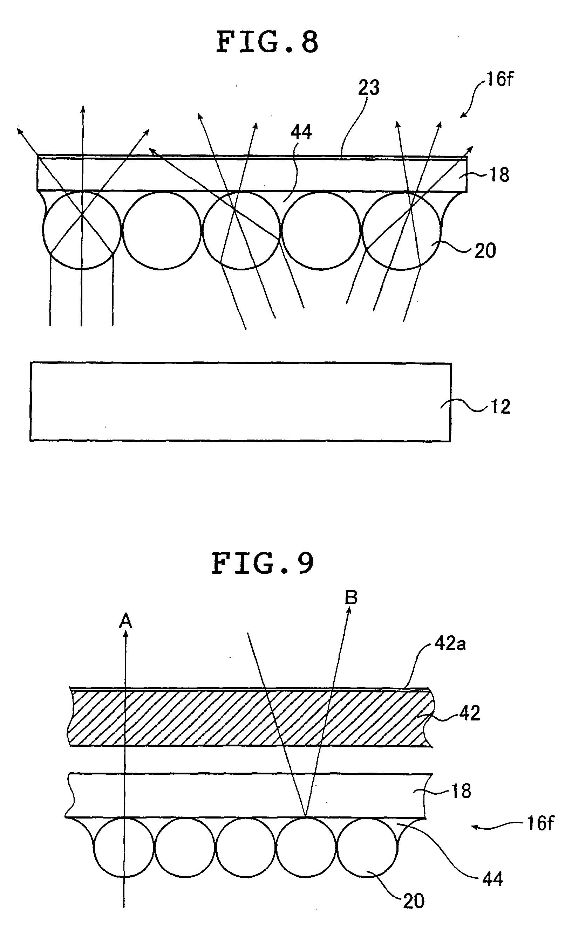

An image display apparatus is another embodiment of the display apparatus according to the second aspect of the invention and we now describe it in detail with reference to Figs. 7-9.

Fig. 7 shows in conceptual form an example of the image display apparatus to which the invention is applied. Since the image display apparatus indicated by 40 in Fig. 7 has essentially the same constituent elements as the display apparatus 10 shown in Fig. 1, like components are identified by like numerals and will not be described in detail. The following description mainly concerns the differences between the two apparatus.

The image display apparatus 40 shown in Fig. 7 is what is commonly called "a liquid-crystal display" (LCD) which uses a liquid-crystal panel 12 as a means of displaying images. It comprises the liquid-crystal panel 12, a backlight section 14a which issues light to be launched into the liquid-crystal panel 12, a light diffusing plate 16f that is attached to the surface of the liquid-crystal panel 12 diffusing the image-bearing light that has passed through it, and a sheet 42 attached to the light diffusing plate 16 for preventing the scattering of extraneous light. The liquid-crystal panel 12 is fitted with color filters (not shown) that have a matrix structure and connected to its driver (not shown). The image display apparatus 40 is combined with any necessary members that are included in a known LCD.

In the embodiment under consideration, an LCD is used as a display device in the image display apparatus 40. However, this is not the sole case of the invention and any other display devices such as CRTs and PDPs may be used as long as they have a matrix structure.

All that is required by the backlight section 14a is that it emit a sufficient amount of light to enable the viewing of images and as long as this condition is met, all types of light source units may be employed including the aforementioned backlight section 14 which emits collimated light. It is not absolutely necessary that the backlight section 14a emit collimated light. On the contrary, from the viewpoint of depixelization (suppressing pixelization), light should be diffused to produce a blurred image, so uncollimated light is preferred.

The light-diffusing plate 16f has a structure with optical refractive power that is typically made of small enough spheres to be indiscernible by the viewer of the image display apparatus 40.

Fig. 8 shows an example of the light diffusing plate 16f in conceptual form. It comprises a light-transmissive support sheet 18 onto which light-transmissive spherical bodies 20 (hereunder called "beads 20") are fixed by means of a binder 44. The beads 20 are in partial contact with the support sheet 18. Needless to say, the light diffusing plate 16f must be one of the plates 16a - 16e described above.

As already mentioned, in the embodiment under consideration, the backlight is not collimated and if the binder 44 is light-transmissive as in a preferred case, the image-bearing light that has passed through the liquid-crystal panel 12 is launched into the spherical beads 20 from various directions and refracted by the beads 20 to achieve adequate diffusion as indicated by the arrows in Fig. 8.

The binder 44 is not limited to any particular types and various adhesives may be used as long as they can fix the beads 20 to the support sheet 18. In the embodiment under consideration, the binder 44 preferably has the ability to transmit light and may be of the same material as those of which the aforementioned binders 25 and 30 are made.

Fig. 9 shows enlarged the light diffusing plate 16f and the sheet 42 for preventing the scattering of extraneous light. The purpose of the sheet 42 is to absorb a certain amount of extraneous light and transmit the rest, thereby preventing the scattering of the extraneous light. To give a non-limiting preferred example, the surface 42a of the sheet 42 is subjected to AR treatment. An advantageous example of the sheet 42 is a VDT (visual display terminal) filter used as an attachment to monitors such as for personal computers.

Suppose that the sheet 42 has a light transmittance of 30%. Referring to light that passes once through the sheet 42 as indicated by arrow A, its transmittance is 30%, meaning 30% of the incident light passes through the sheet 42. As for the light indicated by arrow B which is launched into the sheet 42 from outside and reflected by a bead 20 in the light diffusing plate 16f to make a second pass through the sheet 42, the transmittance is 9% (= 0.3 x 0.3). Thus, the transmittance of reflected extraneous light which is equal to the square of the light transmittance of the sheet 42 drops to a very small value and the scattering of the extraneous light is effectively prevented.

In the embodiment under consideration, the light diffusing plate 16f is attached to the surface of the LCD 12 and the light passing through the LCD 12 is diffused to such an extent that the matrix structure of the LCD 12 becomes practically indiscernible to produce a smooth natural image.

At the same time, the sheet 42 attached to the light diffusing plate 16f ensures that extraneous light will not be scattered by the beads 20 to lower the image contrast. As a result, depixelization can be achieved without compromising the image contrast and this offers a great advantage if the image display apparatus is applied to medical settings since it can display smooth natural images suitable for diagnostic purposes.

As will be understood from the above explanation, the sheet 42 can serve as a faceplate on CRTs since it is designed to have sufficiently low light transmittance that the adverse effects of the extraneous light can be reduced to the square of its light transmittance. Instead of attaching the sheet 42 to the light diffusing plate 16f, the support sheet 18 may be designed to have a capability of preventing the scattering of extraneous light by, for example, adjusting the light transmittance of the support sheet to about 30%.

While the light diffusing plate and the display apparatus according to the present invention have been described above in detail with reference to various embodiments, it should be understood that the invention is by no means limited to the foregoing embodiments alone and various improvements and design modifications may of course be made without departing from the scope and spirit of the invention. For example, the light diffusing plate is by no means limited to the illustrated case of using beads to impart the light diffusing capability.

As described above in detail, the light diffusing plate according to the first aspect of the invention has an outstanding light diffusing capability and, in addition, it causes only limited reflection and scattering of extraneous light while exhibiting high lightfastness.

The display apparatus according to the second aspect of the invention uses this light diffusing plate having outstanding characteristics, so on account of its excellent light diffusing capability and the reduction in the amount of reflection of extraneous light, the display apparatus can be used as a liquid-crystal display that has satisfactory contrast ratio over a wide range of viewing angles and which is particularly suitable for use in medical settings.

According to the second aspect of the invention, a further improvement can be made by eliminating image jaggies (depixelization) without compromising the contrast and, hence, smooth natural images can be displayed on the image display apparatus. Therefore, the present invention finds particularly effective use in medical settings where smooth natural images suitable for diagnostic purposes are required.

## Claims

1. A light diffusing plate comprising a light-transmissive support, a diffusing layer having light-transmissive spheres, and a light-sensitive color forming material interposed between said light-transmissive support and said diffusing layer, said light-sensitive color forming material containing at least a diazonium salt, a coupler and a base and takes on no color in exposed areas, said light-sensitive color forming material being thermally developed to take on color after generally parallel light is applied from a side where said diffusing layer is formed.

2. The light diffusing plate according to claim 1, wherein at least one member of the group consisting of said diazonium salt, said coupler and said base is contained in microcapsules.

3. A light diffusing plate comprising a light-transmissive support, a diffusing layer having light-transmissive spheres, and a light-sensitive color forming material interposed between said light-transmissive support and said diffusing layer, said light-sensitive color forming material comprising a positive-acting silver halide light-sensitive emulsion which takes on no color in exposed areas, said light-sensitive color forming material being subjected to a process for photographic emulsions comprising development, fixing and rinsing steps to take on color after generally parallel light is applied from a side where said diffusing layer is formed.

4. The light diffusing plate according to any one of claims 1 to 3, wherein said light-sensitive color forming material forms a layer of light-sensitive color forming material between said light-transmissive support and said diffusing layer.

5. The light diffusing plate according to any one of claims 1 to 3, wherein said light-sensitive color forming material contacts said light-transmissive spheres and contains a light absorbing material.

6. The light diffusing plate according to any one of claims 1 to 3, further comprising a material that contacts said light-transmissive spheres and which contains a light absorbing material, said light-sensitive color forming material being provided between said material that contacts said light-transmissive spheres and said light-transmissive support.

7. A light diffusing plate comprising a light-transmissive support, a diffusing layer comprising light-transmissive spheres, a material that contacts said light-transmissive spheres, and a light-sensitive.color forming material that is provided between said material contacting said light-transmissive spheres and said light-transmissive support and which takes on no color in exposed areas, said material contacting said light-transmissive spheres being a light-sensitive color forming material that takes on color in exposed areas, said light-sensitive color forming material being developed to take on color after generally parallel light is launched from a side where said diffusing layer is provided.

8. The light diffusing plate according to claim 7, wherein said light-sensitive color forming material that takes on no color in exposed areas contains at least a diazonium salt, a coupler and a base, said color development is thermal development.

9. The light diffusing plate according to claim 8, where at least one member of the group consisting of said diazonium salt, said coupler and said base is contained in microcapsules.

10. The light diffusing plate according to claim 7, wherein said light-sensitive color forming material that takes on no color in exposed areas is a positive-acting silver halide light-sensitive emulsion and said color development is by a process for photographic emulsions comprising development, fixing and rinsing steps.

11. The light diffusing plate according to any one of claims 7 to 10, wherein said light-sensitive color forming material that takes on color in exposed areas is a negative-acting silver halide light-sensitive emulsion and said color development is by a process for photographic emulsions comprising development, fixing and rinsing steps.

12. The light diffusing plate according to any one of claims 7 to 10, wherein said light-sensitive color forming material that takes on color in exposed areas is a negative-acting, light-sensitive, thermally developable material containing a triphenylmetehane-containing leuco dye precursor, a photo-acid generator, a photo-radical generator and a radical quencher.

13. The light diffusing plate according to any one of claims 7 to 12, wherein said light-sensitive color forming material that takes on no color in exposed areas contains a light absorbing material.

14. The light diffusing plate according to any one of claims 5, 6 and 13, wherein said light absorbing material has been removed by said process for photographic emulsions comprising development, fixing and rinsing steps.

15. The light diffusing plate according to any one of claims 5 to 14, wherein said diffusing layer has been formed by burying said light-transmissive spheres after a layer of said material that contacts said light-transmissive spheres was first formed.

16. The light diffusing plate according to any one of claims 1 to 15, wherein a side of said light-transmissive support which is away from said diffusing layer has been subjected to a treatment for non-reflection of light.

17. A display apparatus comprising a liquid-crystal display panel, a backlight section for launching parallel light into said liquid-crystal display panel, and a light diffusing plate according to any one of claims 1 to 16 which is positioned away from said backlight section with respect to said liquid-crystal display panel.

18. The display apparatus according to claim 17, wherein said light diffusing plate has an indiscernible structure providing optical refractive power and is positioned on a viewing side of a display screen of an image display device having a matrix structure.

19. The display apparatus according to claim 17 or 18, wherein said diffusing layer comprises said light-transmissive spheres fixed to a binder.

20. The display apparatus according to any one of claims 17 to 19, wherein a sheet for preventing scattering of extraneous light is positioned on the light diffusing plate provided on the viewing side of said display screen.
